# EUROPEAN PATENT APPLICATION

(11) **EP 4 611 121 A1**
(43) Date of publication of application: **03.09.2025**
(21) Application number: 24160414.9
(22) Date of filing: 29.02.2024
(51) Int. Cl.: H01M 10/613, H01M 10/617, H01M 10/625, H01M 10/647, H01M 10/6552, H01M 10/6556, H01M 10/6569

(54) **BATTERY-MODULE**

(71) Applicant: ABB Schweiz AG, 5400 Baden (CH)
(72) Inventor: SCHULER, Gabriel, 6415 Arth (CH); HE, Minglong, 4310 Rheinfelden (CH); LANDMANN, Daniel, 4125 Riehen (CH); TROENDLE, Pirmin, 79761 Waldshut-Tiengen (DE); WICKI, Stefan, 5702 Niederlenz (CH)
(74) Representative: Sykora & König Patentanwälte PartG mbB

(57) **Abstract**

A battery-module (100) is provided which comprises a first battery-cell and a second battery-cell (101), and a heat-spreader (103) for passively dissipating heat from the first to the second battery-cell (101). The heat-spreader (103) has a first section (105) and a second section (106). The first section (105) comprises a first volume (107) and a first contact-portion (201), wherein the first contact-portion (201) restricts the first volume (105) in a direction towards the first battery-cell (101) and is in thermally conductive physical contact with the first battery-cell (101) such that the first battery-cell (101) and the heat-spreader (103) can exchange heat at the first section (105). The second section (106) comprises a second volume (108) and a second contact-portion (202), wherein the second contact-portion (202) restricts the second volume (108) in a direction towards the second battery-cell (101) and is in thermally conductive physical contact with the second battery-cell (101) such that the second battery-cell (101) and the heat-spreader (103) can exchange heat at the second section (106). The heat-spreader (103) has a cooling-medium (109, 111; 431, 433) for 2-phase cooling of the first and second battery-cells (101). The first and the second section (105, 106) communicate with each other such that a transition from the first to the second aggregate-state of the cooling-medium (109, 111; 431, 433) causes a transport of cooling-medium (109, 111; 431, 433) from the first volume to the second volume (107, 108).

## Description

### FIELD OF THE INVENTION

The invention relates to the field of heat-spreaders, battery cells, and battery-modules. In particular, the invention relates to a battery-module comprising the battery cells and the heat-spreader.

### BACKGROUND OF THE INVENTION

An increasing number of vehicles, e.g. cars, trains, subways, busses, is equipped with battery-packs comprising battery-modules with battery-cells. A typical state-of-the-art battery-cell may have a nominal capacity between 1 Ah and 1000 Ah and may be used for the propulsion of vehicles, in particular for providing energy to a power train of the corresponding vehicle.

Conventional battery-modules comprise two or more of the battery-cells and optionally a housing or hull in which the battery-cells are arranged. The battery-packs comprise two or more of the battery-modules and optionally a housing or hull in which the battery-modules are arranged and/or a Battery Management System (BMS) for monitoring states of the battery-cells. Alternatively, each of the battery-modules may comprise a separate BMS or at least a separate component of the BMS. There are battery-packs known in which the battery-cells are not grouped into battery-modules. These battery-packs may have the same features as the common battery-modules and may be referred to as battery-modules also. The battery-packs and in particular the battery-modules may be arranged in the vehicles.

A well-known challenge with battery-cells, battery-modules, and battery-packs is the excessive heat development in the battery-cells originating from battery-cell abuse. This heat development may originate in one single battery-cell (abuse cell) and spread out to other, neighboring battery-cells of the corresponding battery-module, or further to neighboring battery-modules of the corresponding battery-pack. The uncontrolled development of heat and its spread within the battery-modules is also known as thermal runaway (TR).

TR dissipates significant heat in the kilowatt range and results in exponential heating. Hence, TR in a single cell may rapidly heat neighboring cells and thereby trigger TR propagation to these neighboring cells resulting in upscaling of initial single battery-cell failure to entire system failure. Thus, in the worst case this can lead to the destruction of large parts of the battery-cells or even the entire battery-module or -pack and possibly to a health hazard for the user.

Thus, to achieve TR handling it is key to limit TR propagation and to increase safety and reliability of battery-modules. In particular, due to release of thermal power in the kilowatt range, an efficient thermal runaway cooling during the critical first phase of single or multiple cell abuse is crucial to dissipate thermal energy safely via predefined non-critical paths. Thermal abuse energy must be guided and dissipated with minimum or limited thermal heat transfer to neighboring cells.

Experiments have shown that TR cooling can efficiently limit abuse propagation within battery-modules and -packs. Different approaches for heat dissipation are known: convection, radiation, conduction, liquid cooling and liquid evaporation cooling. Convection and radiation are inherently constraint due to battery-pack or -module enclosure. Conduction is passively possible, but usually puts direct neighboring battery-cells on high risk due to close distance and comparable good thermal conductivity paths between adjacent battery-cells. Liquid cooling is preferred and efficient but requires active pumps to circulate cooling fluid. However, continuing energy supply for pump operation in case of detected abuse is questionable. Liquid evaporation cooling represents an option which allows for efficient cooling without additional energy. However, additional, space-consuming components are required to dissipate the large quantities of heat. Therefore, a TR cooling system is warranted which works on small scale and with minimum effort. Ideally this is done with passive components that do not rely on system control and system power supply.

### DESCRIPTION OF THE INVENTION

Therefore, it is an objective of the present invention to provide a battery-module with efficient and reliable passive TR cooling that is simple, cost-efficient, and effective.

This objective is achieved by the subject-matter of the independent claims. Further exemplary embodiments are evident from the dependent claims and the following description.

In particular, the objective of the present invention is achieved by a battery-module, having a first battery-cell and a second battery-cell, as well as a heat-spreader for passively dissipating heat from the first to the second battery-cell. The heat-spreader has a first section comprising a first volume and a first contact-portion, wherein the first contact-portion restricts the first volume in a direction towards the first battery-cell and is in thermally conductive physical contact with the first battery-cell such that the first battery-cell and the heat-spreader can exchange heat at the first section. The heat-spreader further has a second section comprising a second volume and a second contact-portion, wherein the second contact-portion restricts the second volume in a direction towards the second battery-cell and is in thermally conductive physical contact with the second battery-cell such that the second battery-cell and the heat-spreader can exchange heat at the second section. The heat-spreader further has a cooling-medium for 2-phase cooling of the first and second battery-cells, wherein the cooling-medium transitions from a first aggregate-state to a second aggregate-state as a result of absorbing a specific amount of heat, wherein the cooling-medium has a higher density in the first aggregate-state than in the second aggregate-state. The above battery-pack is characterized in that the first and the second section communicate with each other such that a transport of cooling-medium from the first volume to the second volume results from the transition from the first to the second aggregate-state of the cooling-medium in the first section, such that heat from the first battery-cell is transferred to the second battery-cell via the cooling-medium.

The first and second sections, in particular their contact-portions, may be the areas/portions of the heat-spreader that are arranged adjacent to the battery-cells and absorb heat produced by the corresponding battery-cells. In particular, each section provides an internal volume, e.g., be at least partially hollow, and a contact-portion coupled to the corresponding battery-cell. For example, the internal volume maybe a chamber or cavity. This volume may be partially or fully filled with the cooling-medium that exchanges heat with the battery-cells via the corresponding contact-portion. Thus, the cooling-medium may absorb large portions of heat coming from one of the battery-cells in the corresponding volume, may transport the heat from the corresponding volume to the other volumes, and the corresponding other battery-cells may absorb the heat coming from the cooling-medium via the corresponding contact-portion. In other words, thermal energy may be exchanged between the battery-cells via the corresponding sections of the heat-spreader, in particular via the cooling-medium contained in the volumes of the sections. The direction of the heat transfer (battery-cell to section, or section to battery-cell) is given by the direction of the currently present heat gradient.

The transfer of the heat between the battery-cells and the corresponding sections occurs preferably through thermal conduction. However, in principle heat exchange between the battery-cells and the sections may also occur via thermal radiation and/or thermal convection.

Thermally conductive physical contact of the contact-portions and the battery-cells may mean, for example, that the contact-portions touch the corresponding battery-cells. The contact-portions may consist of any appropriate thermally conductive material. Preferably, the material is in addition electrically isolating. The contact-portions may be parts of a housing or hull of the battery-module, in particular parts of the walls of the housing or hull, respectively.

The cooling-medium is a 2-phase/phase changing cooling medium, i.e., heat absorbed by the cooling-medium serves as latent heat/conversion enthalpy and effects a change of state of the cooling-medium from a first aggregate-state to a second aggregate-state. For example, the first aggregate state may be liquid and the second aggregate state be gaseous. Alternatively, the first aggregate state may be solid and the second aggregate state be liquid or gaseous. In other words, the absorption of heat by the cooling-medium may lead to any phase change process like melting (latent heat of melting), evaporation (latent heat of evaporation) or sublimation (latent heat of sublimation). Preferably, evaporation is employed.

In any case, the density of the cooling-mediums first state should be lower than the density of the second state. In other words, the specific volume of the cooling mediums first state should be lower than in its second state. Then, a phase change results in an increase of pressure in the volume of the section.

Thus, the cooling-medium for 2-phase cooling may be any substances or mixtures of substances suitable for changing its aggregate-state when absorbing a sufficient amount of heat. Preferably, the cooling-medium is liquid in its first aggregate-state and gaseous in its second aggregate-state. For example, water, glycol, alcohol, or ammonia may serve as cooling-medium. Choice of cooling-medium with its phase-change temperature defines a safety threshold for the amount of heat and general operation condition and as such an upper limit for the temperature generated within the battery-module. Additional surface enhancements in the volumes of the sections may support performance, e.g., boiling performance.

In the context of this application, communication of two entities with each other may mean that an exchange of a medium between the entities is possible. Thus, there must be a connection between the entities enabling a transport or moving of the medium from one entity to the other via the connection. Examples of such a connection are a passage, an opening, a duct, a channel, a pipe or a line. The transport or moving of the medium may, e.g., occur via flow or streaming of liquid and/or gaseous medium.

Thus, the first volume or section communicating with the second volume or section may mean that the corresponding first and second volumes or, respectively, first and second sections are connected to each other such that the cooling-medium can freely flow or stream from the first volume or section to the second volume or section. The flowing or streaming cooling-medium may be in its first aggregate-state, in its second aggregate-state, or both. In particular, the communication between the first and second sections/volumes has to be such that the heat induced transition between aggregate-states of the cooling-medium causes a volume-flow of cooling-medium from the first section/volume of the heat-spreader to the second section/volume. In this manner, heat is passively and uniformly transported/dissipated between battery-cells. In particular, heat from the first battery-cell is transferred to the cooling-medium in the first volume of the first section, is then transported to the second volume of the second section by means of the cooling-medium, and from there to the second battery-cell. In addition, the heat-spreader may comprise sections, corresponding volumes and contact-portions for each of the battery-cells of the battery-module. Thus, the entirety of the battery-cells may serve as a reservoir for heat or a heat sink for uniformly dissipating excess heat from individual ones of the battery cells to the other battery-cells.

Therefore, both, a temperature limiting and thermal heat transporting device, is provided. Dissipation capability depends on the total number of battery-cells that are in thermally conductive contact with the heat-spreader and overall available heat capacity of these battery-cells without entering critical conditions. Focus of the heat-spreader is to bridge the critical time after single battery-cell abuse to avoid uncontrolled heat dissipation and high temperatures at direct neighbouring cells.

Consequently, there have to be at least two battery-cells and at least two corresponding sections of the heat-spreader. However, the arrangement is not limited to a certain number of battery cells and/or sections. For example, the battery-pack may comprise any plurality of battery-cells, e.g., an arrangement of m x n battery-cells (arrangement as a matrix), with n rows of battery-cells, e.g., each row constituting a battery-module, and m battery-cells per row or battery-module. Number m is at least two, wherein m ∈ [2, ..., M] with M being a natural number, e.g. smaller than 500, e.g. smaller than 100, and n may be any suitable number, i.e., n ∈ [1, 2, ..., N] with N being a natural number, e.g. smaller than 20, e.g. smaller than 10. The corresponding heat-spreader may have the same amount of sections as the number of battery-cells to which the heat-spreader is attached.

Since the battery-cells have a large heat capacity, the use of the battery-cells according to the invention as a heat reservoir and the uniform dissipation of the heat generated in one of the batter-cells across the remaining battery-cells have the advantage that the large amount of heat rapidly generated during TR can be quickly dissipated passively from the affected battery-cell, which can prevent the destruction of the affected battery-cell and the TR spread to the other battery-cells. For example, thermal heat is transported from the abuse battery-cell to all neighboring battery-cells at temperature levels below critical abuse temperatures of the battery-cells.

The heat-spreader is fully autonomous and does not require any further connections or additional piping. One or more of such heat-spreaders can be attached to all possible side surfaces of the battery-cells like, bottom, side and top (e.g. cell tab connected) and even between adjacent battery-cells. The heat-spreader passively bridges the critical time after single battery-cell abuse to avoid uncontrolled heat dissipation and high temperatures at direct neighboring battery-cells. This contributes to providing the battery-module and thereby of the corresponding battery-pack with efficient and reliable passive TR cooling that is simple, cost-efficient, and effective.

According to an embodiment, the heat-spreader of the battery-module further has a separator which is impermeable to the cooling-medium and which partially separates the first volume from the second volume.

For example, the separator may be a wall arranged between two neighbouring ones of the sections and may separate a part of the volume of one of the sections from the volume of another one of the sections. This wall may be impermeable to the cooling medium, so that the cooling-medium can only pass from the volume of one of the sections into the volume of the other one of the sections at positions where the wall is interrupted/not present. These positions may define corresponding passages or paths from the one of the volumes to the other one of the volumes.

As will become apparent from the figures, if there is more than one wall between the volumes, these walls may define a gap between the sections of the heat-spreader. This gap may be filled, e.g., with air or another material or substance.

In any case, the heat-spreader may be a heat-pipe or a 2-phase thermosiphon in which a plurality of sections is formed by separators like walls, or gaps (each defined by a plurality of walls).

According to an embodiment, the separator is arranged between the first and second volume such that the first and second volume communicate with each other to provide the transport of the cooling-medium, wherein the transported cooling-medium is in the second aggregate-state.

For example, the volume of each section, e.g. the first and second volume, may have a first sub-volume holding the cooling-medium in a first (e.g., liquid) aggregate-state and a second sub-volume holding the cooling-medium in a second (e.g., gaseous) aggregate-state. In particular, the corresponding volume may be only partially filled with cooling-medium in its first aggregate-state such the first sub-volume is defined by the part of the corresponding volume that is filled with cooling-medium in its first aggregate-state, and the second sub-volume is defined by the part that is filled with cooling-medium in its second aggregate-state.

For example, when the battery-module and in particular the heat-spreader are arranged as intended for their use, the first and second volume may communicate with each other via a free first path from the first to the second volume above the separator such that the cooling-medium in its second aggregate state may flow or stream from the first to the second volume via the first path. In particular, when the phase change is an evaporation, the gaseous second aggregate-state of the cooling-medium may rise and due to the pressure increase (and convection) be transported through the first path above the separator to the second volume. That the battery-module and in particular the heat-spreader are arranged as intended for their use may mean that long sides of the separators extend basically in vertical direction.

Advantageously, such a design does not require any further connecting elements like pipes.

According to an embodiment, the separator is arranged between the first and second volume such that the first and second volume communicate with each other to provide the transport of the cooling-medium, wherein the transported cooling-medium is in the first aggregate-state.

Again, the volume of each section, e.g. the first and second volume, may have the first sub-volume and the second volume holding the cooling-medium in the first and the second aggregate state, respectively. Thus, what was discussed for the previous embodiment regarding sub-volumes applies here accordingly.

For example, when the battery-pack and in particular the heat-spreader are arranged as intended for their use, the first and second volume may communicate with each other via a free second path from the first to the second volume below the separator such that the cooling-medium in its first aggregate state may flow from the first to the second volume via the second path. In particular, when the phase change is an evaporation, due to the pressure increase, the liquid first aggregate-state of the cooling-medium may be pressed through the second path below the separator to the second volume. In particular, if there is a communicating connection for the cooling-medium in the first aggregate-state as well as one for the cooling-medium in the second aggregate-state (e.g. first and second free path described above), this has the advantage that the cooling-medium, which has already absorbed heat but is still in the first aggregate-state, may as well be transported into the second volume, so that an additional transport pathway for heat away from the first battery-cell is provided.

According to an embodiment, the communicating first and second volume are hermetically sealed to the outside.

For example, the heat-spreader may be a closed or self-contained system, in particular a heat pipe or 2-phase thermosiphon, with no communicating connections to the outside.

When the battery-pack comprises more than two battery-cells and the heat-spreader comprises correspondingly more than two connected volumes, the connected volumes can communicate with each other and the connected volumes are hermetically sealed to the outside.

Advantageously, such an arrangement provides a more compact design and less maintenance effort.

According to an embodiment, the heat-spreader has an inlet and an outlet, wherein the inlet and the outlet each communicate with the first and second volume. Further, the outlet communicates with the inlet via a connection for transporting the cooling-medium, wherein the connection is arranged outside of the heat-spreader, such that the heat-spreader and the connection form a cooling-circuit.

Thus, in this embodiment, the volumes of the heat-spreader, e.g. the first and second volume and in case further volumes, are not hermetically sealed to the outside. The communication of the inlet and the outlet with the corresponding volumes of the heat-spreader may be direct or indirect. For example, the inlet may communicate with the first volume directly, e.g., the inlet leads directly into the first volume, and with the second volume, indirectly, e.g. via the first volume. In the latter case, cooling-medium first enters the first volume and then, via the communicating connection of the first and second volumes, enters the second volume (or other potential volumes). The same applies to the outlet accordingly.

The external connection of the inlet to the outlet is located outside the heat-spreader. This connection is to be distinguished from the internal connection via the volumes of the heat-spreader. Such an external connection can be made in a manner well-known to the skilled person as long as it enables the inlet to communicate with the outlet, i.e., cooling-medium can pass from the inlet to the outlet through the external connection. For example, the connection can be implemented by means of a pipe, a hose or another suitable line.

For example, if the heat-spreader comprises k sections, any flow of the cooling-medium through the m sections and the piping is circular, because the connections between the sections lead the cooling-medium from *section 1* to *section 2* to ... *section k* and from *section k* back to *section 1.*

In this embodiment, the increasing pressure during a phase transition of the cooling-medium in one of the sections of the heat-spreader generates a circulation of cooling-medium in the cooling-circuit formed by the heat-spreader and the external connection. In this way, heat generated in a battery-cell, e.g. during TR, is transported away from the cell by the cooling-medium and transferred to the other battery-cells. In other words, because TR heat at an abused one of the battery-cells is absorbed in one of the sections and the resulting pressure increase in this section induces the flow of the cooling-medium through the cooling-circuit, the cooling-medium circulates through the heat-spreader and the external connection, such that heat is spread to the other battery-cells.

In this embodiment, the cooling-medium is preferably liquid or gaseous so that it can flow as freely as possible.

The heat-spreader may be completely or partially filled with the cooling-medium. In any case, the heat-spreader has to be sufficiently filled with the cooling-medium such that the flow of the cooling-medium becomes possible. Preferably, the heat-spreader is almost entirely or entirely filled with the cooling-medium.

According to an embodiment, the battery-pack further has a check-valve that permits circulation of the cooling-medium only in a predefined direction and that prevents any back-flow of circulating the cooling-medium.

For example, the check-valves may be any kind of one-way/unidirectional/back-flow/diode valve, i.e., any valve that permits passage of the cooling medium only in one direction. The check-valve may be, e.g., a Tesla-valve or a spring-operated valve like a ball check-valve or disk check-valve.

Using a check-valve has the advantage that the direction of the flow can be predetermined and any back-flow in the opposite direction can be prevented. Therefore, a check-valve may further support reliably generating flow in the heat-spreader/cooling-circuit. There may be one or more check-valves arranged within the heat-spreader, e.g., between its sections, and/or outside the heat-spreader, e.g., within the external connection.

According to an embodiment, the battery-module further has a storage-tank containing the cooling-medium wherein the storage-tank communicates with the cooling-circuit. Further, the battery-module may have a control-component to release of the cooling-medium of the storage-tank to the cooling-circuit when the pressure in the cooling-circuit reaches or exceeds a predefined threshold-pressure.

For example, the storage-tank may be integrated in the external connection, e.g., such that the cooling-medium may enter through an inlet at one end of the storage-tank and may exit through an outlet at the opposite end of the storage-tank. The control-component may control the flow of cooling-medium through the inlet or the outlet such that the control-component may control a release of the cooling-medium from the storage-tank to the circuit and/or any through-flow of the cooling-medium through the storage-tank.

Alternatively, the storage-tank is not fully integrated in the cooling-circuit, but communicates with it, e.g., via an outlet of the storage-tank, such that the control-component may control flow of the cooling-medium through the outlet and thereby control a release of the cooling-medium from the storage-tank to the cooling-circuit.

The storage-tank may contain the same or a different cooling-medium as the cooling-circuit. For example, it may contain a different cooling-medium, that is optimized for quick heat dissipation to prevent thermal-runaway, i.e., be a TR enhancing different cooling medium/agent.

For example, in case of liquid cooling medium, the optional storage-tank is driven by evaporation pressure and keeps liquid supply to evaporation section running.

Having a storage-tank has the advantage of improving a constant supply of the cooling-medium, and to influence the cooling-medium and its composition.

The control-component comprises any kind of valve, or other components like a burst-disk, which ruptures or breaks when applied pressure reaches or exceeds a predefined threshold. For example, the control-component may be mechanically operated, e.g., spring- or gravity-operated, or electronically operated, e.g., via a control logic that measures an abnormal fluid pressure and/or temperature or a failing cell/abuse cell directly via temperature and/or electrical diagnostics. Depending on the chosen design, the control-component may control inflow of cooling-medium from the cooling-circuit to the storage-tank, or outflow of cooling-medium from the storage-tank to the cooling-circuit. The control-component may be adapted to permit through-flow of cooling-medium when pressure in the circuit reaches or exceeds a pre-defined threshold pressure.

There may be more than one control-component, e.g., a first control-component of a first type at an inlet of the storage-tank and a second control-component of the same or different type at an outlet of the storage-tank.

According to an embodiment, the control-component is a control-valve. For example, the control-valve will depend on the pressure in the circuit, a temperature, or electrical diagnostics of the battery-cell/s control through-flow through the valve.

According to an embodiment, the control-component is arranged at an outlet or an inlet of the storage-tank.

According to an embodiment, the battery-module further has a cylinder and a piston, wherein the piston is driven by the pressure in the cooling-circuit and presses the cooling-medium of the storage-tank into the cooling-circuit.

For example, the piston may have two ends. One at the upstream end and one at the downstream end (with respect to the direction of flow of the cooling-medium). The upstream end of the piston may be arranged inside the cylinder and may be fitting the cylinders cross-section, while the downstream end of the piston may be positioned within the storage-tank and may be fitting the storage-tanks cross-section. Upon sufficient pressure applied to the upstream end, the downstream end of the piston pushes cooling-medium from the storage-tank into the cooling-circuit. The piston may be a hydraulic piston.

Using a cylinder and piston offers the advantage that the piston area ratios can be adapted to optimize release of cooling-medium to the cooling-circuit. For example, as in the above-described case the piston may have an upstream end and a downstream end. The two ends of the piston may have areas of different sizes, such that pressure transfer can be adapted or enhanced via the ratio of the sizes of the areas of the two piston ends, utilizing that the pressure is given by the ratio of force to area size.

According to an embodiment, the control-component is arranged at an inlet of the cylinder.

In this case, the control-component controls whether pressure is applied to the piston or not. If no cooling-medium can pass the control-component, no pressure is applied to the piston.

According to an embodiment, the storage-tank is pre-pressurized, and the control-component is at the outlet of the storage-tank.

In this embodiment, the control-component first blocks the passage of cooling-medium at the outlet. If the pressure in the cooling-circuit reaches or exceeds the predetermined threshold value, the control-component opens, and the previously generated pressure pushes the cooling-medium out of the storage-tank. The previously generated pressure for the storage-tank can be equal to or greater than the pressure in the cooling-circuit. It is preferably greater than the (expected) maximum-pressure in the cooling-circuit and chosen in such a way that even in the event of a high pressure, the pressure acting on the cooling-medium in the storage-tank is sufficient to transport cooling-medium into the cooling-circuit against the pressure inside the cooling-circuit.

This has the advantage that the cooling-circuit can be flooded quickly and reliably with the cooling-medium.

According to an embodiment, the battery-pack further has a pre-pressurized vessel, wherein the storage-tank is comprised inside the pre-pressurized vessel and designed to be compressed when the control-component opens to press the cooling-medium of the storage-tank into the cooling-circuit.

For example, the storage-tank may be a balloon, bladder, cushion, or any other inflatable tank that is compressible when pressure is applied from outside. It may be located inside the pre-pressurized vessel, and the cooling-medium may be filled into the storage-tank under pressure so that the pre-pressurized vessel exerts pressure on the filled storage-tank when the control component is closed. As in the previous embodiment, the pressure applied to the storage-tank may be equal or, preferably, greater than the (expected) maximum-pressure in the cooling-circuit.

According to an embodiment, the battery-module further has a pre-pressurized vessel, wherein the storage-tank communicates with the pre-pressurized vessel, such that the pressure of the pre-pressurized vessel presses the cooling-medium of the storage-tank into the cooling-circuit when the control-component opens.

In this embodiment, the pre-pressurized vessel does not compress the storage-tank, when the control-component opens. Rather, the pre-pressurized vessel communicates with the storage-tank, such that the pre-pressurized medium inside the pre-pressurized vessel can flow or stream into the storage-tank and press its cooling-medium out and into the cooling-circuit. Thus, the storage-tank maybe inside the pre-pressurized vessel, as in the previous embodiment, the pre-pressurized vessel maybe inside the storage-tank, or both may be separate vessels/tanks.

This has the advantage, that a refill or exchange of the storage-tank and/or a refill or exchange of the pre-pressurized vessel and, therefore, their reuse is easier.

According to an embodiment, the battery-module further comprises a pressure-limiting component. For example, the pressure-limiting component may be a burst-disk or a pressure-relief valve. This provides a limiting safety threshold for the pressure inside the heat-spreader. For example, the burst-disk may rupture or break, or the pressure-relief valve open when the pressure reaches or exceeds a predefined threshold.

According to an embodiment, the battery-module further has a vent-channel.

For example, the vent-channel may be combined with the pressure-limiting component, such that the cooling-medium leaving the pressure-limiting component enters the vent-channel. For example, this avoids contamination of the battery-pack with the cooling-medium, as the discharged cooling-medium is collected by a closed system. For example, cooling-fluid vapor phase could be used as scrubber fluid in the vent-channel for chemical and physical particle and toxic gas-binding.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows a side view of an exemplary embodiment of a battery-module;
Fig. 2 shows a top view of the battery-module of figure 1;
Fig. 3 shows simplified characteristics of conductive and TR heat-spreader temperature profiles in the battery-module of figure 1;
Fig. 4 shows a perspective view of an exemplary embodiment of a battery pack comprising two battery-modules with an external connection and a storage-tank;
Fig. 5 shows a side view of an exemplary cylinder, piston, and storage-tank to be used instead of the storage-tank of figure 4;
Fig. 6 shows a side view of an exemplary pre-pressurized vessel and storage-tank to be used instead of the storage-tank of figure 4;
Fig. 7 shows a side view of an exemplary pre-pressurized vessel and storage-tank to be used instead of the storage-tank of figure 4.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

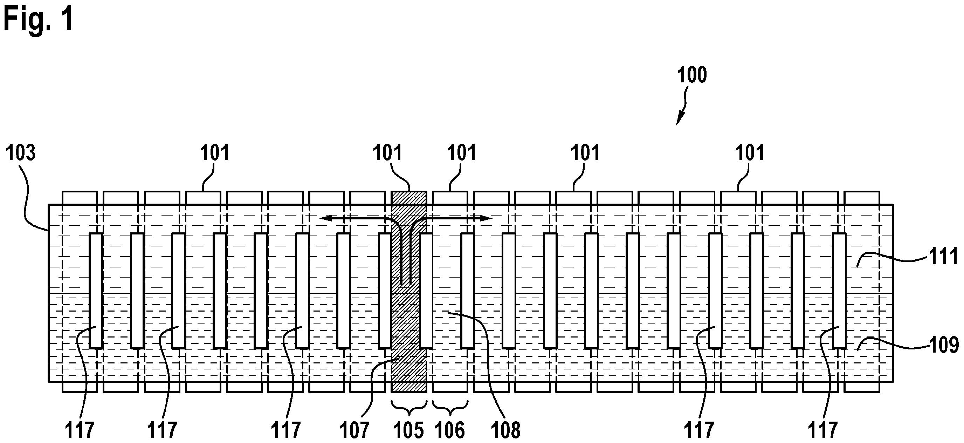

Fig. 1 shows a side view of an exemplary embodiment of a battery-module 100. The battery-module 100 may comprise at least two, e.g., 20, battery-cells 101.

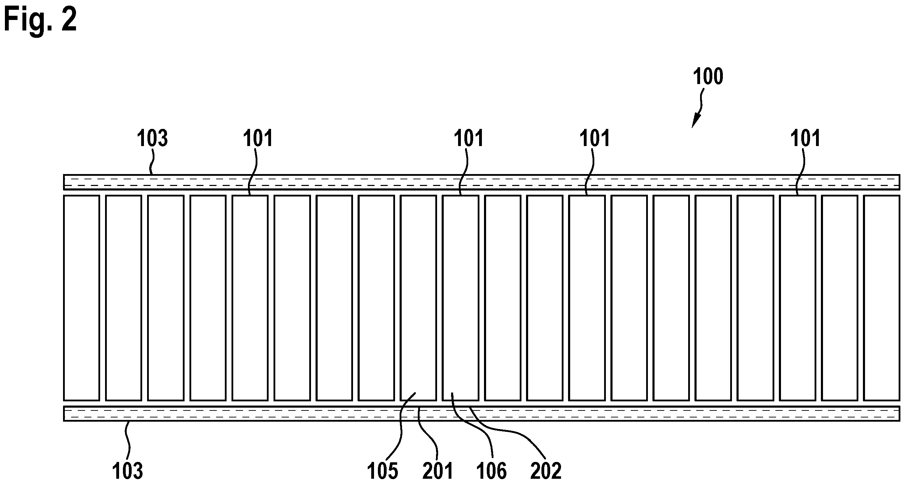

Fig. 2 shows a top view of the battery-module 100 of figure 1
Each of the battery-modules 100 may comprise a housing (not shown), e.g. a module housing. Two or more of the battery-modules 100 may be combined within one battery-pack. The battery-pack additionally may comprise a Battery Management System (BMS), e.g. for monitoring states of the battery-cells 101. For example, such a battery-pack, e.g. the battery-module 100 with the battery-cells 101, may be used for driving a car, a train, a subway, a bus, etc.

The battery-module 100 may further comprise a heat-spreader 103 which may have several sections. For example, for each battery-cell 101 there may be one corresponding section adjacent to the corresponding battery-cell 101, in particular a first section 105 and a second section 106. Each section 105, 106 may have a volume and a contact portion. For example, the first section 105 has a first volume 107 and a first contact-portion 201 and the second section 106 has a second volume 108 and a second contact-portion 202. The volumes 107, 108 each may be formed as a chamber. The contact-portions 201, 202 restrict the corresponding volume 107, 108 in a direction towards the battery-cells 101.

The contact-portions 201, 202 are shown in Fig. 2, which provides a top view of the battery-module 100. The contact-portions 201, 202 may be walls of the corresponding sections 105, 106 that are in thermally conductive physical contact with one or more walls of the corresponding battery-cells 101. The contact-portions 201, 202 may touch the walls of the corresponding battery-cells 101, wherein in figure 2 the contact-portions 201, 202 are shown at a distance to the walls of the battery-cells 101 for clarity reasons only. In Fig. 2 there are two heat-spreaders 103, each arranged at a side wall of the stack of battery-cells 101. However, there may be only one heat-spreader 103 arranged at one of the side walls, or at the lower or upper wall, or between the battery-cells 101. Further, there may be more than one heat-spreader 103, wherein the individual heat-spreaders 103 may be arranged at any wall of the battery-cells 101, e.g., at one of the side walls, or at the lower or upper wall, or between the battery-cells 101. The contact-portions 201, 202 may be of any appropriate thermally conductive material and may, preferably, be electrically isolating. The contact-portions 201, 202 may be a part of the housing of the battery-module 100 and as such may be of the same material as the housing.

Back to Fig. 1, the volumes 107, 108 may be partially separated by corresponding separators 117. Each separator 117 may be a wall of the corresponding section 105, 106.

The heat-spreader 103 may be partially filled with a cooling-medium 109 in its first, e.g., liquid, aggregate state and partially filled with cooling-medium 111 in its second, e.g., gaseous, aggregate state. Further, Fig. 1 shows that the battery-cell 101 at the first section 105 is heated, and it might be that a TR occurs, wherein the first section 105 of the heat-spreader 103 corresponding to the heated battery-cell 101 is also heated via the first contact-portion 201 touching the heated battery-cell 101 and restricting the first volume 107 of the first section 105.

The heat produced by the heated battery-cell 101, may result in a transition of the cooling-medium 109, 111 in the heated first section 105 from its first aggregate-state to its second aggregate-state in which it may have a higher specific volume than in its first aggregate-state. Thus, the heat may be transformed in latent heat that causes a state change.

Due to the increased specific volume of the cooling-medium 111 in its second aggregate state, a transport, e.g., a flow or streaming, of the cooling-medium 111 to the neighboring sections, e.g. the second section 106, and their volumes, e.g. the second volume 108, may occur (indicated by the arrows in Fig. 1). The heat produced by the heated battery-cell 101 is, thus, uniformly transported to the other battery-cells 101 of the battery-module 100 and may be absorbed by them.

Dissipation capability may depend on total number of the battery-cells 101 contacting the heat-spreader 103 and overall available heat capacity of these battery-cells 101 without entering critical conditions. Focus of the heat-spreader 103 may be to bridge the critical time after single battery-cell abuse to avoid uncontrolled heat dissipation and high temperatures at direct neighboring battery-cells 101. Choice of cooling-medium 109, 111 with its specific temperature for phase change, e.g., by evaporation, may define the safety threshold and general operation condition. Additional surface enhancements in the volumes 107, 108 may support performance, e.g., boiling performance.

This heat-spreader 103 is fully autonomous and does not require connections for cooling-medium or additional piping.

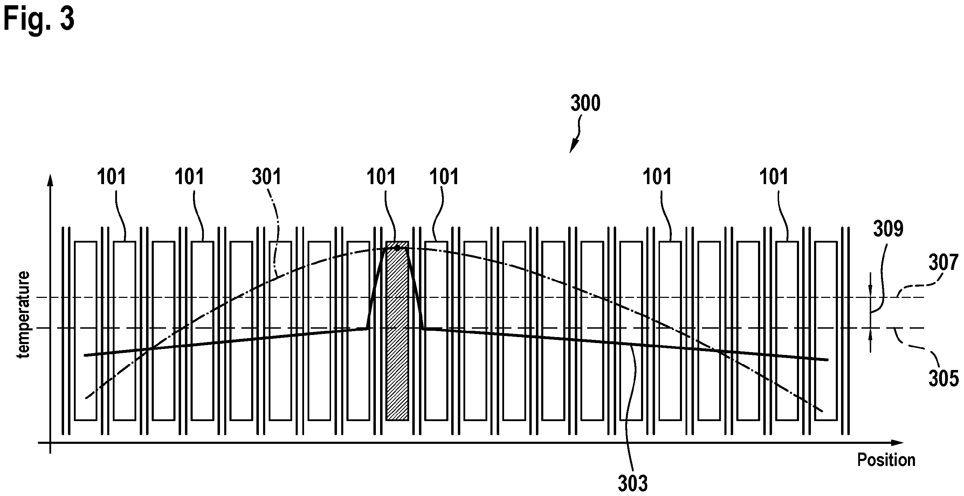

Fig. 3 shows an example diagram of simplified characteristics 300 of conductive and TR heat-spreader temperature profiles as in the battery-module 100 of Figs. 1 and 2 with the cooling-medium 109 in the liquid first aggregate-state. The abscissa indicates the position along the sequence of battery-cells 101. In the background of diagram 300 the battery-cells 101 and, in particular, the heated battery-cell 101, which here is assumed to be a TR battery-cell 101, are indicated for better illustration, with the heated battery-cell 101 being shaded. The ordinate provides the temperature in arbitrary units. Profile curve 301 illustrates the conductive temperature profile as it would occur in a comparable battery-module without the heat-spreader 103. Profile curve 303, on the other hand, illustrates a TR heat spread temperature profile as it would occur in the battery-module 100 with the heat-spreader 103. Straight line 305 illustrates the fluid evaporation temperature and straight line 307 the abuse/propagation critical temperature level for the battery cells. The arrows 309 indicate the achieved safety margin.

As can be taken from Fig. 3 the number of the battery-cells 101 with abuse propagation risk, i.e., the battery-cells 101 to which battery-cell abuse may propagate, is considerably smaller, and may be even limited to the initially heated battery-cell 101, when the heat-spreader 103 according to one of the embodiments is used. In fact, despite TR in the heated battery-cell 101, the temperature of the neighboring battery-cells 101 may be kept below fluid evaporation temperature 305 and considerably below the abuse/propagation critical temperature level 307 which grants a significant safety margin 309. This may be use for providing an upper temperature limit for all of the battery-cells 101 and thereby for the battery-module 100. This upper temperature limit may be shifted up or down by choosing the corresponding cooling-medium 109 having a correspondingly higher or lower evaporation temperature.

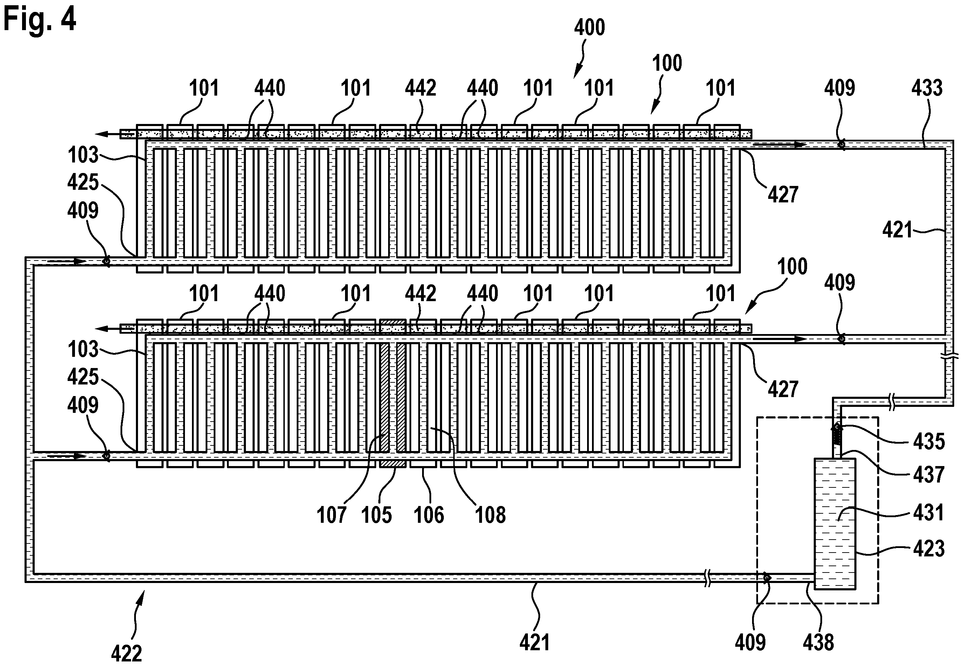

Fig. 4 shows a perspective view of an exemplary embodiment of a battery-pack 400 comprising two battery-modules 100 with an external connection 421 and a storage-tank 423. Alternatively, the battery pack 400 may comprise only one battery-module 100 or three or more battery-modules 100. Each of the battery-modules 100 may comprise a separate heat-spreader 103. The heat-spreaders 103 are communicatively coupled to each other via the external connection 421. Alternatively, the heat-spreaders 103 may be completely separated from each other, wherein each heat-spreader 103 may comprise its own external connection 103 in this case.

Other than in the embodiment of Figs. 1 and 2, the heat-spreaders 103 are not closed systems, i.e., their sections 105, 106 are not hermetically sealed to the outside. Rather, there may be an inlet 425 and an outlet 427 at each of the heat-spreaders 103. The inlet 425 and the outlet 427 communicate with the volumes 107, 108 of the corresponding sections 105, 106. The inlet 425 and the outlet 427 communicate with each other via the external connection 421. The heat-spreaders 103 and the external connection 421 form a cooling-circuit 422.

In case of more than one heat-spreader 103, as shown in Fig. 4, several battery-moduels 100 and thereby rows of battery-cells 101, and several corresponding heat-spreaders 103 with inlets 425 and outlets 427 may be arranged next to each other and may be connected by the external connection 421 such that the cooling-circuit 422 is formed. In particular, the heat-spreaders 103 can be connected in parallel with the external connection 421.

The storage-tank 423 may be integrated into the external connection 421 and, thus, may form part of the cooling-circuit 422. The storage-tank 423 may be filled with a cooling-medium 431 that is the same or a different one than the cooling-medium 433 of the heat-spreader 103 and connection 421. The storage-tank 423 may have an inlet 437. The cooling-media 431, 433 may be the same or different cooling-media than those described with respect to figures 1 to 3.

There may be a spring-loaded control-valve 435 arranged at the inlet 437 of the storage-tank 423. There may be one or more check-valves 409 arranged within the connection 421.

When a battery-cell 101 is a TR battery-cell an excessive amount of heat may be produced, e.g., during TR. This heat is absorbed by the cooling-medium 433 of the volume 407 of the first section 105 corresponding to the heated battery-cell 101. The resulting transition of the cooling-medium 433 from its first to its second aggregate-state results in an increased pressure in the first volume 107, because of the increase of specific volume of the cooling-medium 433. If the pressure reaches or exceeds a pre-defined threshold, the control-valve 435 opens, i.e., permits passing of the cooling-medium 433. This causes flow of the cooling-medium 433 through the heat-spreader 103, the connection 421 and the storage-tank 423. Thus, heat is transported away from the heated battery-cell 101 and dissipated. In particular, heat is passively distributed uniformly across the remaining battery cells 101 of each of the battery-modules 100 and thereby across the battery-pack 400.

When the control-valve 435 permits through-flow of the cooling-medium 433, the entering cooling-medium 433 may displace the cooling-medium 431 of the storage-tank 423 and may move or press the cooling-medium 431 through an outlet 438 of the storage-tank 423 into the external connection 421.

The check-valves 409 permit passage of the cooling-medium 431, 433 only in one pre-defined direction (indicated by the arrows in Fig. 4). Thus, the check-valves 409 may prevent any backflow and pre-define the direction of flow. The check-valves 409 may, e.g., be ball check-valves or disk check-valves.

Optionally, the heat-spreaders 103 described with respect to figures 1 to 4 each may comprise several overpressure safety elements 440 (shown in figure 4 only). The overpressure safety elements 440 may be configured for releasing pressure, in particular gas, from the volumes 107, 108 of the corresponding heat-spreaders 103 when a predetermined critical overpressure is reached despite of the heat-spreaders 103. The overpressure safety elements 440 each may be or may comprise a burst disc. The overpressure safety elements 440 may be communicatively coupled to corresponding overpressure channels 442. The overpressure channels 442 are configured for guiding the gas from the corresponding heat-spreader 103 to an exterior of the corresponding battery-module 100.

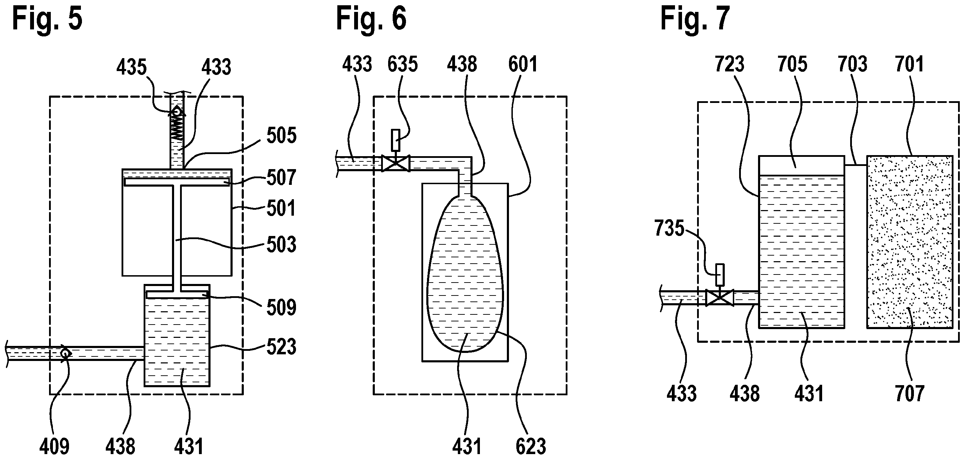

Fig. 5 shows a side view of an exemplary cylinder 501, a piston 503 and a storage-tank 523 which may be used instead of the storage-tank 423 of Fig. 4. There may be a control-valve 435 arranged at an inlet 505 of the cylinder 501 and a check-valve 409 at the outlet 438.

The control-valve 435 and the check valve 409 may fulfil the same function as in Fig. 4. When the control-valve 435 opens any pressure in the heat-spreaders 103 may be transferred via the cooling-medium 433 to an upstream end 507 (in direction of the flow) of the piston 503. This may move the piston 503. The pressure at the upstream end 507 may be transferred to a downstream end 509, which may press the cooling-medium 431 of the storage-tank 523 out of the storage-tank 523 and into the cooling-circuit 422. The piston 503 may be a hydraulic piston. The pressure transfer may be enhanced via choosing a specific ratio of the size of the area of the upstream end 507 and the size of the area of the downstream end 509. Thus, based on the relation pressure = force/area size the pressure transfer to the cooling-medium 431 of the storage-tank 523 may be optimized.

Fig. 6 shows a side view of an exemplary pre-pressurized vessel 601 and storage-tank 623 which may be used instead of the storage-tank 423 of Fig. 4.

There may be a control-valve 635 at the outlet 438 of the storage-tank 623. The storage-tank 623 may be inside the pre-pressurized vessel 601. The storage-tank 623 may be any inflatable tank, container or vessel that can be compressed by the pressure of the pre-pressurized vessel 601. For example, the storage-tank 601 may be a balloon, bladder, or cushion. The pressure applied by the pre-pressurized vessel 601 to the storage-tank 623 may be close to, equal to or greater than the expected maximum pressure in the heat-spreader 103. Once the pressure in the cooling-circuit 422 reaches or exceeds a threshold value, the control-valve 635 opens, the storage-tank 623 is compressed and the cooling-medium 431 is pressed from the storage-tank 623 into the circuit.

Fig. 7 shows a side view of an exemplary pre-pressurized vessel 701 and a storage-tank 723 which may be used instead of the storage-tank 423 of Fig. 4.

There may be a control-valve 735 at the outlet 438 of the storage-tank 723. The storage-tank 723 may be separated from the pre-pressurized vessel 701, i.e., they may be two separate entities. The pre-pressurized vessel 701 is filled with a driving medium 707 under pressure, preferably a gas. The storage-tank 723 and the pre-pressurized vessel 701 may communicate with each other via a connecting part 703, such that the driving medium 707 of the pre-pressurized vessel 701 can flow or stream into the storage-tank 723. Once the control-valve 735 opens, e.g., because the pressure in the heat-spreader 103 reaches or exceeds a predetermined value, the driving medium 707 of the pre-pressurized vessel 701 presses the cooling-medium 431 out of the storage-tank 723 and into the cooling-circuit. To this end, the storage-tank 723 may have a sub-volume 705 that is not filled with cooling-medium 431. For example, when used as intended the outlet 438 may be arranged at a lower portion of the storage-tank 723 and the sub-volume 705 be above the cooling-medium 433. The driving medium 707 may then expand to the sub-volume 705 and displace the cooling-medium 433.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. For example, all of the above battery cells 20 may be configured as stand-alone battery cell, within one of the battery arrangements 18, e.g. within corresponding battery modules, and/or within a battery-pack comprising one or more of the battery arrangements 18 and optionally the controller 62 and/or the BMS.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 100: battery-module
- 101: battery-cell
- 103: heat-spreader
- 105: first section
- 106: second section
- 107: first volume
- 108: second volume
- 109: cooling-medium in first aggregate-state
- 111: cooling-medium in second aggregate-state
- 117: separator
- 201: first contact-portion
- 202: second contact-portion
- 300: example diagram
- 301: conductive temperature profile
- 303: TR heat spread temperature profile
- 305: fluid evaporation temperature
- 307: abuse/propagation critical temperature level
- 309: safety margin
- 400: battery-pack
- 409: check-valve
- 421: external connection
- 422: cooling-circuit
- 423: storage-tank
- 425: inlet
- 427: outlet
- 431: cooling-medium of storage-tank
- 433: cooling-medium of heat-spreader and connection
- 435: control-valve
- 437: inlet of storage-tank
- 438: outlet of storage-tank
- 440: overpressure safety element
- 442: overpressure channel
- 501: cylinder
- 503: piston
- 505: inlet of cylinder
- 507: upstream end of piston
- 509: downstream end of piston
- 523: storage-tank
- 601: pre-pressurized vessel
- 623: storage-tank
- 635: control-valve
- 701: pre-pressurized vessel
- 703: connecting part
- 705: sub-volume
- 707: driving medium
- 723: storage-tank
- 735: control-valve

## Claims

1. Battery-module (100), comprising:
a first battery-cell (101) and at least a second battery-cell (101);
a heat-spreader (103) for passively dissipating heat from the first to the second battery-cell (101), wherein the heat-spreader (103) has
a first section (105) comprising a first volume (107) and a first contact-portion (201), wherein the first contact-portion (201) restricts the first volume (105) in a direction towards the first battery-cell (101) and is in thermally conductive physical contact with the first battery-cell (101) such that the first battery-cell (101) and the heat-spreader (103) can exchange heat at the first section (105);
a second section (106) comprising a second volume (108) and a second contact-portion (202), wherein the second contact-portion (202) restricts the second volume (108) in a direction towards the second battery-cell (101) and is in thermally conductive physical contact with the second battery-cell (101) such that the second battery-cell (101) and the heat-spreader (103) can exchange heat at the second section (106); and
a cooling-medium (109, 111; 431, 433) for 2-phase cooling of the first and second battery-cells (101), wherein the cooling-medium (109, 111; 431, 433) transitions from a first aggregate-state to a second aggregate-state as a result of absorbing a specific amount of heat, wherein the cooling-medium (109, 111; 431, 433) has a higher density in the first aggregate-state (109) than in the second aggregate-state (111);
**characterized in that**
the first and the second section (105, 106) communicate with each other such that a transport of cooling-medium (109, 111; 431, 433) from the first volume (107) to the second volume (108) results from the transition from the first to the second aggregate-state of the cooling-medium (109, 111; 431, 433) in the first section (105), such that heat from the first battery-cell (101) is passively transferred to the second battery-cell (101) via the cooling-medium (109, 111; 431, 433).

2. Battery-module (100) according to claim 1, wherein the heat-spreader (103) further has a separator (117) which is impermeable to the cooling-medium (109, 111; 431, 433) and which partially separates the first volume (107) from the second volume (108).

3. Battery-module (100) according to claim 2, wherein the separator (117) is arranged between the first and second volume (107, 108) such that the first and second volume (107, 108) communicate with each other to provide the transport of the cooling-medium (111; 431, 433), wherein the transported cooling-medium (111; 431, 433) is in the second aggregate state.

4. Battery-module (100) according to claim 2 or 3, wherein the separator (117) is arranged between the first and second volume (107, 108) such that the first and second volume (107, 108) communicate with each other to provide the transport of the cooling-medium (109; 431, 433), wherein the transported cooling-medium (109; 431, 433) is in the first aggregate-state.

5. Battery-module (100) according to any of the preceding claims, wherein the communicating first and second volume (107, 108) are hermetically sealed to the outside.

6. Battery-module (100) according to any of claims 1 to 4, wherein
the heat-spreader (103) further has an inlet (425) and an outlet (427);
wherein
the inlet (425) and the outlet (427) each communicate with the first and second volume (107, 108); and
the outlet (427) communicates with the inlet (425) via a connection (421) for transporting cooling-medium (109, 111; 431, 433), wherein the connection (421) is arranged outside of the heat-spreader (103), such that the heat-spreader (103) and the connection (412) form a cooling-circuit (422).

7. Battery-module (100) according to claim 5 or 6, further comprising:
a check-valve (409) that permits circulation of cooling-medium (109, 111; 431, 433) only in a predefined direction and that prevents any back-flow of circulating cooling-medium (109, 111; 431, 433).

8. Battery-module (100) according to claim 6 or 7, further comprising:
a storage-tank (423; 523; 623; 723) containing cooling-medium (109, 111; 431, 433) wherein the storage-tank (423; 523; 623; 723) communicates with the cooling-circuit (422); and
a control-component to effect a release of the cooling-medium (109, 111; 431, 433) of the storage-tank (423; 523; 623; 723) to the cooling-circuit (422) when the pressure in the cooling-circuit (422) reaches or exceeds the predefined threshold-pressure.

9. Battery-module (100) according to claim 8, wherein
in the control-component (435; 635; 735) is a control-valve.

10. Battery-module (100) according to claim 8 or 9, wherein
the control-component (435; 635; 735) is arranged at an outlet (438) or an inlet (437) of the storage-tank (423).

11. Battery-module (100) according to any of claims 8 to 10, further comprising:
a cylinder (501) and a piston (503), wherein the piston (503) is driven by the pressure in the cooling-circuit (422) and presses the cooling-medium (109, 111; 431, 433) of the storage-tank (423; 523; 623; 723) into the cooling-circuit (422).

12. Battery-module (100) according to claim 11, wherein
the control-component (435; 635; 735) is arranged at an inlet (505) of the cylinder (501).

13. Battery-module (100) according to claim 10, wherein
the storage-tank (423; 523; 623; 723) is pre-pressurized; and
the control-component is at the outlet (438) of the storage-tank (435; 635; 735).

14. Battery-module (100) according to claim 13, further comprising:
a pre-pressurized vessel (601);
wherein the storage-tank (423; 523; 623; 723) is arranged inside the pre-pressurized vessel (601) and designed to be compressed when the control-component (435; 635; 735) opens to press the cooling-medium (109, 111; 431, 433) of the storage-tank (423; 523; 623; 723) into the cooling-circuit (422).

15. Battery-module (100) according to claim 13, further comprising:
a pre-pressurized vessel (701);
wherein the storage-tank (423; 523; 623; 723) communicates with the pre-pressurized vessel (701), such that the pressure of the pre-pressurized vessel (701) presses the cooling-medium (109, 111; 431, 433) of the storage-tank (423; 523; 623; 723) into the cooling-circuit (422) when the control-component (435; 635; 735) opens.
